# EUROPEAN PATENT APPLICATION

(11) **EP 4 425 685 A1**
(43) Date of publication of application: **04.09.2024**
(21) Application number: 23824166.5
(22) Date of filing: 09.06.2023
(51) Int. Cl.: H01M 50/531, H01M 50/553, H01M 50/15, H01M 50/103

(54) **SECONDARY BATTERY WITH IMPROVED TERMINAL STRUCTURE**

(30) Priority: 13.06.2022 KR 20220071220
(71) Applicant: LG Energy Solution, Ltd., Seoul 07335 (KR)
(72) Inventor: KO, Young Jun, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/007980
(87) International publication number: WO 2023/243949

(57) **Abstract**

Provided are secondary batteries. The secondary batteries may include a case having a plurality of surfaces including a first surface and a second surface; a positive terminal located on a surface of the case; a negative terminal located on the surface of the case and spaced apart from the positive terminal; and a terminal structure comprising a terminal body, an extension terminal, and a binding member, wherein: the terminal body includes a first face covering the positive terminal or the negative terminal and at least one second face extending from the first face; the extension terminal electrically connects to the positive terminal or the negative terminal and is located on the at least one second face of the terminal body; and the binding member is coupled to or integrally formed with the extension terminal.

## Description

### CROSS-REFERENCE TO RELATED APPLICATIONS

This application claims the benefit of Korean Patent Application No. KR 10-2022-0071220, filed on June 13, 2022. The contents of the above-identified applications are herein incorporated by reference in their entireties.

### TECHNICAL FIELD

The present disclosure relates to a secondary battery, and more particularly, to a prismatic secondary battery with an improved terminal structure that allows for easier modification of the arrangement of positive and/or negative terminals and facilitates electrical connection of multiple secondary batteries.

### BACKGROUND

Unlike primary batteries, secondary batteries are rechargeable and have been extensively researched and developed recently due to potential for miniaturization and high capacity applications. With increasing technological advancements and demand for mobile devices, as well as the growing prominence of electric vehicles and energy storage systems in response to environmental concerns, the demand for secondary batteries as an energy source is rapidly increasing.

Depending on the shape of the battery case, secondary batteries are classified into coin-type batteries, cylindrical batteries, prismatic batteries, and pouch-type batteries. An electrode assembly, which is installed inside the battery case in secondary batteries, is a power generation element capable of charging and discharging. It has a laminated structure of electrodes and separators.

Electrode assemblies can be broadly categorized into three types: a Jellyroll type, which involves winding a positive electrode and a negative electrode of an active material-coated sheet with a separator interposed therebetween; a stack type, where a plurality of positive electrodes and negative electrodes are sequentially stacked with a separator interposed therebetween; and a Stack & Folding type, where unit cells of a stack type are wound with a long separator film.

When considering prismatic secondary batteries among the various types of secondary batteries, it is common for the positive and negative terminals to be arranged together on one side or to be placed on opposite sides. The placement of these terminals is determined by the design specifications of various devices that use prismatic secondary batteries. By adhering to these design specifications, the arrangement of the positive and negative terminals must be separately designed each time, even within the same form factor, which can be quite labor-intensive.

In addition, to assemble a plurality of secondary batteries into modules or packs, electrical connections like busbars are required, and designing these busbars can also be complicated because, the busbar design depends on the arrangement structure of the positive and negative terminals.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### SUMMARY

The present disclosure provides a novel prismatic secondary battery that allows for easier modification of the arrangement structure of the positive and negative terminals without the need for separate design changes, and facilitates the electrical connection of multiple secondary batteries.

However, the technical problems to be solved by the present disclosure are not limited to the above-described problem, and other problems not mentioned can be clearly understood by those skilled in the art from the following description.

The present disclosure relates to a secondary battery. The secondary batteries may include a case having a plurality of surfaces including a first surface and a second surface; a positive terminal located on a surface of the case; a negative terminal located on the surface of the case and spaced apart from the positive terminal; and a terminal structure comprising a terminal body, an extension terminal, and a binding member, wherein: the terminal body includes a first face covering the positive terminal or the negative terminal and at least one second face extending from the first face; the extension terminal electrically connects to the positive terminal or the negative terminal and is located on the at least one second face of the terminal body; and the binding member is coupled to or integrally formed with the extension terminal.

In one exemplary embodiment of the present disclosure, an extension wire electrically connecting the extension terminal to the positive terminal or negative terminal is not exposed outside of the terminal body.

In addition, an extension wire electrically connecting the extension terminal to the positive terminal or negative terminal may be insulated outside of the terminal body.

The terminal body may be coupled to the first surface of the case and the second surface of the case extending from the first surface of the case, and the extension terminal is exposed on the second surface of the case.

In addition, a second terminal structure may be coupled to the positive or negative terminal.

In one exemplary embodiment of the present disclosure, the binding member may be a male binding member or a female binding member.

The male binding member or female binding member may be a first male binding member or a first female binding member; and the first male binding member or the first female binding member coupled to the positive terminal or the negative terminal may be further coupled to a second male binding member or a second female binding member coupled to a second negative terminal or a second positive terminal of an adjacent secondary battery.

A secondary battery and an adjacent secondary battery may be aligned in a width direction; and the first male binding member or the first female binding member coupled to the second male binding member or the second female binding member may be coupled in the width direction.

Here, the first female binding member may include a groove having an opening in the width direction, and the second male binding member may include a protrusion projecting in the width direction.

In addition, the binding member may be integrally formed with the extension terminal.

Meanwhile, in another exemplary embodiment of the present disclosure, a secondary battery and an adjacent secondary battery may be aligned in a width direction; and the first male binding member or the first female binding member coupled to the second male binding member or the second female binding member may be coupled in a height direction.

In such exemplary embodiment, the first female binding member may include a slot open in the height direction, and the male binding member may include an insert extended in the height direction.

Secondary batteries of the present disclosure having the aforementioned configurations can more easily change the arrangement structure of the positive and/or negative terminals by coupling the terminal structure to a corner portion of the top surface of the secondary battery. Therefore, it is possible to reduce the development and production costs of prismatic secondary batteries by more freely allowing the positioning of the terminal portions without affecting the existing inner cell manufacturing process.

In addition, by providing binding members on the terminal structures, it is possible to directly connect these terminal structures to each other without using a separate busbar. For example, when connecting a plurality of secondary cells in a series circuit along the width direction, thereby simplifying the structure and reducing manufacturing costs when manufacturing battery modules or packs.

However, advantageous effects of the present disclosure are not limited to those mentioned above, and other effects not mentioned will be apparent to one of ordinary skill in the art from the following description.

### BRIEF DESCRIPTION OF THE DRAWINGS

The following drawings accompanying this specification illustrate preferred exemplary embodiments of the present disclosure and are intended to serve as a further understanding of the technical ideas of the present disclosure in conjunction with the detailed description that follows, so the present disclosure is not to be construed as limited to what is shown in such drawings.
FIG. 1 is a perspective view of a secondary battery according to the present disclosure.
FIG. 2 is a perspective view illustrating the coupling structure of a secondary battery and a terminal structure according to the present disclosure.
FIG. 3 is a drawing illustrating an embodiment of a female binding member.
FIG. 4 is a drawing illustrating an embodiment of a male binding member.
FIG. 5 is a drawing illustrating a structure in which two secondary batteries are electrically connected to each other through a binding member.
FIG. 6 is a drawing illustrating male and female binding members according to another embodiment of the present disclosure.
FIG. 7 is a drawing illustrating a structure in which a plurality of secondary batteries are electrically connected using the binding member of FIG. 6.
FIG. 8 is a drawing illustrating a structure in which a plurality of secondary batteries are electrically connected using the binding member of FIG. 6.

### DETAILED DESCRIPTION

The present disclosure may have various modifications and various examples, while specific examples are illustrated in the drawings and described in detail in the description.

However, it should be understood that the present disclosure is not limited to specific embodiments, and includes all modifications, equivalents or alternatives within the spirit and technical scope of the present disclosure.

The terms "comprise," "include" and "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a secondary battery, specifically to a secondary battery with positive and negative terminals spaced apart on the top surface of a hexahedral shaped cell case.

A secondary battery according to the present disclosure, in one example, has a terminal structure coupled to at least one top surface corner of the battery case. The terminal structure includes a terminal body coupled to a top surface of the battery case and one or more faces extending from the top surface while enclosing the positive or negative terminal so that it is not exposed, and an extension terminal electrically connected to the positive or negative terminal and exposed to any one surface of the terminal bodies except the top surface.

In addition, the terminal structure includes a binding member provided on an extension terminal. The binding member is a member that directly connects the extension terminals of the terminal structure facing each other, and a plurality of secondary cells can be electrically connected by the binding member.

In this way, the secondary battery of the present disclosure including the terminal structure can be freely changed to meet the needs of the user without any design changes by simply applying the terminal structure to the position of the positive and negative terminals arranged on the top surface of the battery case, thereby reducing the production cost of the prismatic secondary battery.

In addition, by providing a binding member on the terminal structure, it is possible to directly connect the terminal structure to each other without a separate busbar when connecting a plurality of secondary cells in a series circuit along the width direction, thereby simplifying the structure and reducing manufacturing costs when manufacturing battery modules or packs.

Below, detailed embodiments of the secondary battery according to the present disclosure is described with reference to the attached drawings. Furthermore, terms used in the following description, such as front and back, left and right, or top and bottom, which specify spatial positional relationships, are based on the attached drawings unless specifically defined otherwise.

### First Embodiment

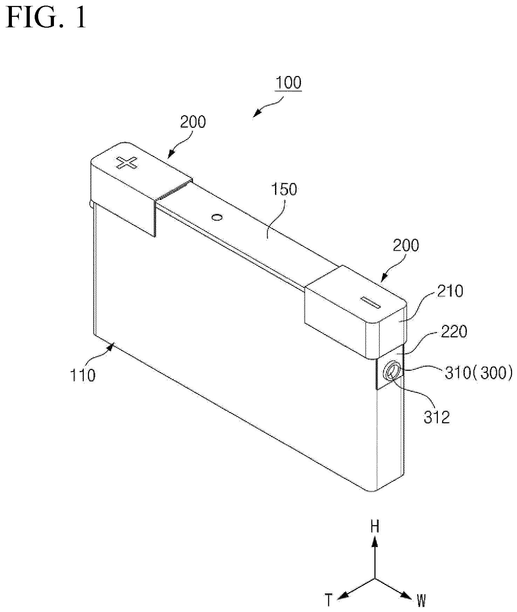

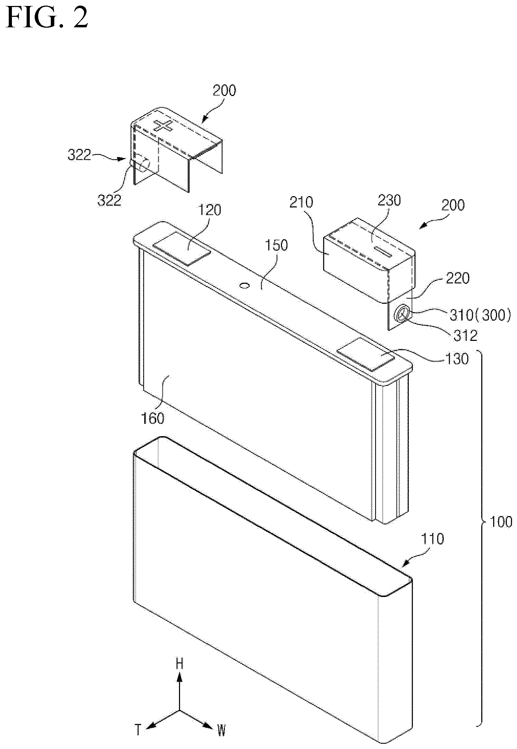

FIG. 1 is a perspective view of a secondary battery 100 according to the present disclosure, and FIG. 2 is a perspective view illustrating the coupling structure between the secondary battery 100 and the terminal structure 200 according to the present disclosure.

Referring to FIGS. 1 and 2, the present disclosure pertains to a secondary battery 100, specifically a prismatic secondary battery 100 where the positive terminal 120 and the negative terminal 130 are spaced apart and arranged on the top surface of a battery case 110 that forms a hexahedral shape. Here, the prismatic secondary battery 100 depicted in the drawings is merely one example, and the ratios of width, depth, and height can vary. However, for the convenience of the description, the directions of front and back, and top, bottom, left, and right are referred to based on the attached drawings. For instance, a side on which the positive terminal 120 and the negative terminal 130 are disposed is called the top surface, and its opposite side is called the bottom surface.

Additionally, the coordinate axes displayed in FIGS. 1 and 2 designate the width direction W, thickness direction T, and height direction H of the secondary battery. The width direction W indicates the direction intersecting both the positive terminal 120 and the negative terminal 130. The thickness direction T indicates the depth direction perpendicular to the width direction W, and the height direction H designates the direction perpendicular to both the width direction W and the thickness direction T.

The secondary battery 100 of the present disclosure includes a terminal structure 200. The terminal structure 200 is a hinge-shaped structure that attaches to at least one corner of the top surface of the battery case 110 and includes a terminal body 210 and an extension terminal 220.

The terminal body 210 refers to the body of the terminal structure 200 that is coupled to the top surface of the battery case 110 and one or more surfaces (such as a side, front, rear, etc.) extending from the top surface while enclosing the positive terminal 120 or the negative terminal 130 from being exposed to the outside.
The extension terminal 220 is a connection terminal that is electrically connected to the positive terminal 120 or the negative terminal 130 and is exposed on a surface of the terminal body 210, excluding the top surface. In other words, since the positive terminal 120 and the negative terminal 130 are covered by the terminal body 210 and are not exposed, the extension terminal 220 serves the function of a new positive terminal 120 and negative terminal 130 located on another surface other than the top surface.

Therefore, the secondary battery 100 of the present disclosure allows for the freedom to change the positions of the positive terminal 120 and the negative terminal 130 located on the top surface of the battery case 110 simply by applying the terminal structure 200 without any separate design modifications. Consequently, the present disclosure enables the convenient alteration of the positions of the positive terminal 120 and the negative terminal 130 using the terminal structure 200 for a prismatic secondary battery 100 with the same form factor, so the production cost of the prismatic secondary battery 100 can be reduced.

Furthermore, the terminal structure 200 includes a binding member 300 provided on the extension terminal 220. The binding member 300 is a component that directly connects the extension terminals 220 of the terminal structures 200 facing each other. With the binding member 300, a plurality of secondary batteries 100 can be electrically connected.

In this way, by equipping the terminal structure 200 with the binding member 300, it becomes possible to directly connect the terminal structures 200 to each other. Therefore, a plurality of secondary batteries 100 can be electrically interconnected directly through the binding members 300 without the need for a separate bus bar. As a result, it simplifies the structure and reduces the manufacturing cost when producing battery modules or packs.

Moreover, the terminal structure 200 can be attached to the positive terminal 120 and the negative terminal 130 one by one. As a result, the positive terminal 120 and the negative terminal 130 are positioned on opposing side surfaces. In other words, the positive terminal 120 and the negative terminal 130, which were originally arranged together on the top surface of the battery case 110, are relocated to adjacent side surfaces. Consequently, the prismatic secondary battery 100, initially designed as a unidirectional secondary battery, is transformed into a bidirectional secondary battery.

Additionally, the terminal structure 200 can be attached to the completed secondary battery 100. Or, as depicted in FIG. 2, it is possible to manufacture by first coupling the terminal structure 200 to the cap plate 150 which forms the top surface of the battery case 110 before inserting the electrode assembly 160 into the battery case 110.

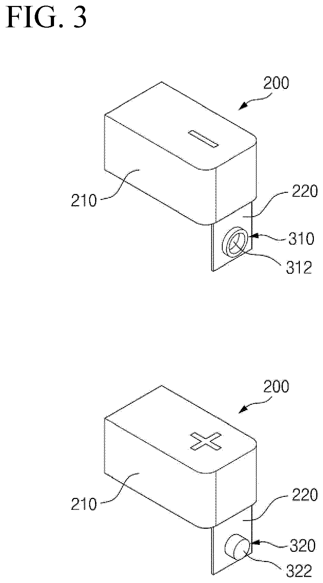

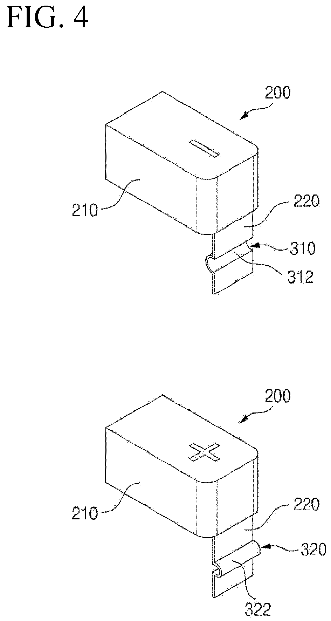

FIG. 3 and FIG. 4 illustrate the binding member 300 provided in the terminal structure 200 in detail. In one embodiment of the present disclosure, the binding member 300 is provided in two types: a female binding member 310 and a male binding member 320. The female binding member 310 and the male binding member 320 complement each other, in other words, they form a male-female shape that can be fitted into one another.

In FIG. 3, one embodiment of the binding member 300 illustrated shows that the female binding member 310 forms a groove 312, and the male binding member 320 forms a protrusion 322 that fits into the groove 312 of the female binding member 310. Although the cross-sections of the groove 312 and protrusion 322 in the drawings are circular, the shape of the groove 312 and protrusion 322 is not limited to the depicted form.

In the embodiment of FIG. 4, the shape of the groove 312 and the protrusion 322 form an open shape rather than a closed shape. Specifically, the groove 312 of the female binding member 310 and the protrusion 322 of the male binding member 320 are designed in a manner that they can be formed by bending a flat plate, and are characterized in that they form a dovetail structure in cross-section so that they can be elastically bound by spring action to exert a strong fastening force.

Here, the binding member 300 illustrated in FIGS. 3 and 4 has the female binding member 310 formed with a groove 312 that is open in the width direction W, and the male binding member 320 is formed with a protrusion 322 that protrudes in the width direction W. This means that the female binding member 310 and the male binding member 320 can be fastened and released along the width direction W.

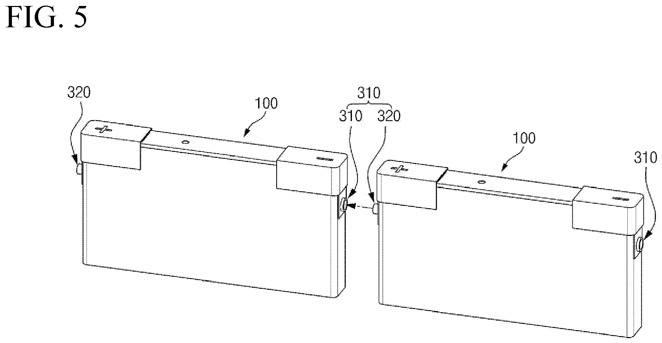

FIG. 5 illustrates a configuration where two secondary batteries 100 are interconnected through binding members 300 provided on their respective extension terminals 220. Since the binding member 300 is electrically connected to the extension terminal 220, when a plurality of secondary batteries 100 are connected to each other via the binding members 300, the plurality of secondary batteries 100 are electrically connected to each other. The binding member 300 can be manufactured as a separate component and attached to the extension terminal 220, or, as shown in the embodiment of the drawing, it is also possible for the binding member 300 to be integrally formed with the extension terminal 220.

Referring back to FIG. 5, given that the female binding member 310 and the male binding member 320 can be engaged and disengaged along the width direction W, the two secondary batteries 100 are also interconnected along the width direction W. In this way, a plurality of secondary batteries 100 can be sequentially connected along the width direction W. In forming an electrical circuit, a plurality of secondary batteries 100 may be connected in series. Therefore, when a secondary battery 100 has its negative terminal 130 equipped with a female binding member 310 - or more precisely, when the extension terminal 220 connected to the negative terminal 130 is equipped with the female binding member 310 - a positive terminal 120 of an adjacent secondary battery should be equipped with a male binding member 320. In other words, adjacent secondary batteries 100 equipped with male and female binding members 300 having different polarity terminals.

However, this combination of binding members 300 does not necessarily limit any one secondary battery 100 to having one female binding member 310 and one male binding member 320. Of course, while it is common for all of the secondary batteries 100 to have the same male/female pattern of terminals of the same polarity, it is also possible to configure the secondary cells 100 such that some of the secondary batteries 100 have only female binding members 310 while others have only male binding members 320. In other words, a plurality of secondary batteries 100 may be connected in series along the width direction W, as long as the terminals of adjacent secondary batteries 100 with different polarities are provided with binding members 300 having different male-female properties.

### Second Embodiment

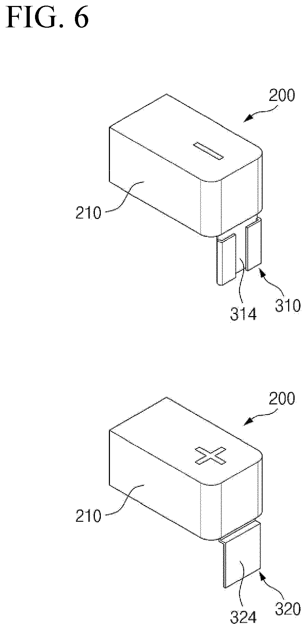

FIG. 6 illustrates a female binding member 310 and male binding member 320 according to the second embodiment of the present disclosure.

The second embodiment of FIG. 6 is the same as the first embodiment described above in that a plurality of secondary batteries 100 can be connected in series along the width direction W, but there is a difference in the structure of interconnecting the female binding member 310 and the male binding member 320.

In the first embodiment shown in FIGS. 1 to 5, the groove 312 of the female binding member 310 and the protrusion 322 of the male binding member 320 are facing the width direction W, so that the direction of the female-male coupling in the first embodiment is the width direction W of the secondary battery 100.

In comparison, in the second embodiment of FIG. 6, the female binding member 310 includes a slot 314 open in the height direction H, and the male binding member 320 includes an insert 324 extending in the height direction H. That is, in the second embodiment, the plurality of secondary cells 100 are sequentially connected along the width direction W, but the female binding members 310 and male binding members 320 of adjacent secondary batteries 100 are engaged and disengaged along the height direction H.

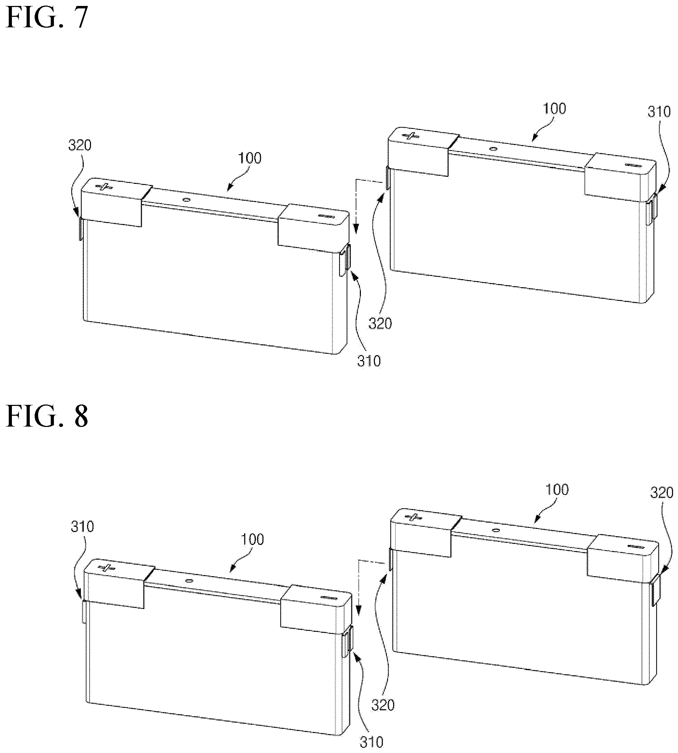

FIGS. 7 and 8 illustrate a structure in which a plurality of secondary batteries 100 are electrically connected using the binding member 300 of the second embodiment.

FIGS. 7 and 8 illustrate a configuration in which two secondary batteries 100 are interconnected by male and female coupling in the height direction H through the binding members 300 provided on their respective extension terminals 220. As in the case of the first embodiment, the binding members 300 are electrically connected to the extension terminals 220, so that when the plurality of secondary batteries 100 are connected to each other through the binding members 300, the plurality of secondary batteries 100 are electrically connected to each other.

In particular, in the binding member 300 of the second embodiment, the female binding member 310 and the male binding member 320 of the adjacent secondary battery 100 are engaged and disengaged along the height direction H, so that the female binding member 310 and the male binding member 320, once engaged, are not disengageable in the width direction W. Therefore, there is little concern that the engaged binding member 300 will be disengaged from each other even if the secondary battery 100 is subjected to fluctuations or vibrations. In this respect, the binding member 300 according to the second embodiment greatly improves the stability of the electrical connection made by the direct connection of the binding member 300 when a plurality of secondary batteries 100 constitute a module or pack.

In the second embodiment, the plurality of secondary batteries 100 may be connected one after another along the width direction W, so that the plurality of secondary batteries 100 may be connected in series to form an electrical circuit. And to connect in series, if the negative terminal 130 of one secondary battery 100 is provided with a female binding member 310, the positive terminal 120 of another adjacent secondary battery 100 should be provided with a male binding member 320. In other words, the adjacent secondary batteries 100 should have terminals with different polarities provided with binding members 300 having different male-female properties.

Thus, as shown in FIG. 7, the secondary battery 100 may be configured such that all secondary batteries 100 have the same male/female pattern of binding members 300 with terminals of the same polarity, or may be configured such that some secondary batteries 100 have only female connecting members 310 while other secondary batteries 100 have only male connecting members 320, as shown in FIG. 8.

Note that the binding member 300 of the second embodiment may also be manufactured as a separate member and bonded to the extension terminal 220, or the binding member 300 may be integrally formed with the extension terminal 220, as shown in the illustrated embodiment.

Various principles have been described above in more detail through the drawings and embodiments. However, the configurations described in the drawings or the embodiments in the specification are merely embodiments of the present disclosure and do not represent all the technical ideas of the present disclosure. Thus, it is to be understood that there may be various equivalents and variations in place of them at the time of filing the present application.

### Reference numerals

100: SECONDARY BATTERY 110: BATTERY CASE
120: POSITIVE TERMINAL 130: NEGATIVE TERMINAL
140: VENTING PART 150: CAP PLATE
160: ELECTRODE ASSEMBLY 200: TERMINAL STRUCTURE
210: TERMINAL BODY 220: EXTENSION TERMINAL
230: EXTENSION WIRE 300: BINDING MEMBER
310: FEMALE BINDING MEMBER 312: GROOVE
314: SLOT 320: MALE BINDING MEMBER
322: PROTRUSION 324: INSERT
W: WIDTH DIRECTION T: THICKNESS DIRECTION
H: HEIGHT DIRECTION

## Claims

1. A secondary battery comprising:
a case having a plurality of surfaces including a first surface and a second surface;
a positive terminal located on a surface of the case;
a negative terminal located on the surface of the case and spaced apart from the positive terminal; and
a terminal structure comprising a terminal body, an extension terminal, and a binding member, wherein:
the terminal body includes a first face covering the positive terminal or the negative terminal and at least one second face extending from the first face;
the extension terminal electrically connects to the positive terminal or the negative terminal and is located on the at least one second face of the terminal body; and
the binding member is coupled to or integrally formed with the extension terminal.

2. The secondary battery of claim 1, further comprising:
an extension wire electrically connecting the extension terminal to the positive terminal or the negative terminal, wherein the extension wire is not exposed outside of the terminal body.

3. The secondary battery of claim 1, further comprising:
an extension wire electrically connecting the extension terminal to the positive terminal or the negative terminal, wherein the extension wire is insulated outside of the terminal body.

4. The secondary battery of claim 1, wherein:
the terminal body is coupled to the first surface of the case and the second surface of the case extending from the first surface of the case, and
the extension terminal is exposed on the second surface of the case.

5. The secondary battery of claim 4, further comprising:
a second terminal structure covering the positive terminal or the negative terminal.

6. The secondary battery of claim 4, wherein:
the binding member is a male binding member or a female binding member.

7. The secondary battery of claim 6, wherein:
the male binding member or the female binding member is a first male binding member or a first female binding member; and
the first male binding member or the first female binding member coupled to the positive terminal or the negative terminal is further coupled to a second male binding member or a second female binding member coupled to a second negative terminal or a second positive terminal of an adjacent secondary battery.

8. The secondary battery of claim 7, wherein:
the secondary battery and the adjacent secondary battery are aligned in a width direction; and
the first male binding member or the first female binding member coupled to the second male binding member or the second female binding member are coupled in the width direction.

9. The secondary battery of claim 8, wherein:
the first female binding member comprises a groove having an opening in the width direction, and
the second male binding member comprises a protrusion projecting in the width direction.

10. The secondary battery of claim 1, wherein:
the binding member is integrally formed with the extension terminal.

11. The secondary battery of claim 7, wherein:
the secondary battery and the adjacent secondary battery are aligned in a width direction; and
the first male binding member or the first female binding member coupled to the second male binding member or the second female binding member are coupled in a height direction.

12. The secondary battery of claim 11, wherein:
the first female binding member comprises a slot open in the height direction, and
the second male binding member comprises an insert extended in the height direction.
